# EUROPÄISCHE PATENTSCHRIFT

(11) **EP 2 020 393 B1**
(45) Veröffentlichungstag und Bekanntmachung des Hinweises auf die Patenterteilung: **12.10.2011**
(21) Anmeldenummer: 08160931.5
(22) Anmeldetag: 23.07.2008
(51) Int. Cl.: B65H 26/00, B65H 19/30, B65G 47/88

(54) **Einrichtung zum Abbremsen oder Stoppen eines Wickels nach Auswurf aus einer Position und Verfahren zum Betreiben einer Einrichtung zum Abbremsen oder Stoppen eines Wickels**
Device for braking or stopping a wound roll after being thrown out of a position and method for operating a device for braking or stopping a wound roll
Dispositif de freinage ou d'arrêt d'un rouleau après son éjection d'une position et procédé de fonctionnement d'un dispositif de freinage ou d'arrêt d'un rouleau

(30) Priorität: 31.07.2007 DE 102007035867
(43) Veröffentlichungstag der Anmeldung: 04.02.2009
(73) Patentinhaber: Voith Patent GmbH, 89522 Heidenheim (DE)
(72) Erfinder: Nelles, Josef, 52224 Stolberg (DE); Marquardt, Sven, 47918 Tönisvorst (DE)

(56) Entgegenhaltungen:
- WO-A-03/002439
- WO-A-2006/049471
- US-A- 5 257 748

## Beschreibung

Die Erfindung betrifft eine Einrichtung zum Abbremsen oder Abstoppen eines Wickels, nachdem dieser aus einer Position ausgeworfen wurde, umfassend wenigstens eine Stoppeinrichtung, die in wenigstens zwei Funktionsstellungen verbringbar ist - eine erste Funktionsstellung als Abbremsstellung und zumindest eine weitere Funktionsstellung, in welcher keine Abbremswirkung erzeugt wird, sowie ein Verfahren zum Abbremsen oder Stoppen eines Wickels.

Die Erfindung wird im Folgenden anhand der Situation in einer Papierfabrik beschrieben, in der in einem der letzen Produktionsschritte einer Papierbahn die Papierbahn zu einer Wickelrolle aufgewickelt wird. Hierzu dient beispielsweise eine Rollenwickelvorrichtung. Die Wickelrolle, auf der die Papierbahn aufgewickelt wird, liegt dabei an einer Tragwalze an. Eine derartige Wickelvorrichtung kann beispielsweise als Doppeltragwalzenwickler oder als Stützwalzenwickler ausgebildet sein. In jedem Falle ergibt sich aber das Problem, dass die Wickelrolle, wenn sie fertig gewickelt ist, aus der Wickelposition heraus bewegt und abgefördert werden muss, wie in der DE 10 2005 017 998 beschriebenwird hierzu die Wickelrolle aus der Wickelposition ausgestoßen und zunächst auf einen Ablagetisch abgelegt, der dann abgesenkt wird, wird die Wickelrolle auf einem Förderer abgelegt.

Alternativ zu einem mechanisch sehr aufwendigen Ablagetisch, der eine aufwendige Mechanik zum Absenken benötigt, wird in alternativen Verfahren beschrieben, die Rolle auszuwerfen und über eine Rampe einen Förderer zuzuführen. Die über eine Rampe auf den Förderer abrollende Rolle muss dann auf dem Förderer gestoppt beziehungsweise angehalten werden, ohne dass die fertigen Rollen beschädigt werden.

Um die Rolle ohne Beschädigung abzubremsen beziehungsweise zu stoppen, sind im Stand der Technik unterschiedliche Konzepte beschrieben worden. Beispielsweise wird in der EP 0 554 700 A1 offenbart, wie mit Hilfe einer pneumatischen Abbrems- beziehungsweise Stoppeinrichtung für Wickelgewichte, die sich zwischen beispielsweise 200 und 8000 kg bewegen, eine Abbremsung erreicht werden kann. Da verschiedene Abrollgeschwindigkeiten beim Abstoppen behandelt werden müssen, schlägt die EP 0 554 700 A1 einen pneumatisch betriebenen Abrollstopp vor, bei dem das Abstoppen mit Hilfe eines pneumatischen Zylinders erfolgt. Um den Gegendruck, den der pneumatische Zylinder zum Abbremsen der unterschiedlichen Rollen aufbauen muss, zu ermitteln, wird die Rollengröße in der EP 0 554 700 A1 identifiziert und der jeweilige Pneumatikzylinder demgemäß angesteuert.

In der EP 0 554 700 A1 wird die Bremskraft als Funktion des Wickelgewichtes eingestellt. Ein Nachteil der Vorrichtung gemäß der EP 0 554 700 A1 ist, dass erst, wenn ein Auftreffen der Rolle auf die Abbremseinrichtung sensiert wird, mit Hilfe des Pneumatikzylinders die Bewegung der Wickelrolle durch die Gegenkraft im Pneumatikzylinder aktiv abgebremst wird. Dieser Vorgang kann aufgrund der unterschiedlichen Rolleneigenschaften, wie Masse und Durchmesser unterschiedlich lang andauern. Die Steuerung ist sehr aufwendig.

Alternativ zu einer Einrichtung, wie sie in der EP 0 554 700 A1 beschrieben ist, kann vorgesehen sein, Stoppleisten vorzusehen. Die Wickel werden bei diesem Verfahren über eine Rampe auf einen Förderer ausgeworfen. Auf der der Rampe gegenüberliegenden Seite sind Abstoppeinrichtungen vorgesehen.

In einer ersten Ausgestaltung können die Stoppleisten fest angeordnete Leisten sein. Derartige fest angeordnete Leisten haben den Nachteil, dass es bis zum vollständigen Stillstand der Rolle zu einem Oszillieren derselben zwischen der fest installierten Stoppleiste und der Rampe kommen kann. Hierdurch kann die Papierrolle beschädigt werden.

Alternativ zu der fest installierten Stoppleiste schlägt daher die EP 0 705 783 A1 absenkbare Stoppleisten vor, die in den Boden versenkt werden können. Je nachdem, wie hoch die Stoppteile aus dem Boden herausragen und mit welcher Kraft die Stoppleisten in den Boden durch die auftreffenden Rollen gedrückt werden, können die Bewegungen der Rollen abgebremst werden, bis zum vollständigen Stillstand. Dabei wird die kinetische Energie der Rollen in mechanische Energie, die zum Absenken der Stoppleiste benötigt wird, beispielsweise gegen die Kraft eines Luftbalgens oder Pneumatikzylinders umgewandelt.

In der EP 0 705 783 A1 ist als ein Nachteil derartiger Abstoppeinrichtungen beschrieben, dass das Abstoppen mit einer derartigen versenkbaren Abstoppleiste dann zuverlässig funktioniert, wenn die Gegenkraft, die durch die Abstoppleiste aufgebracht wird durch Eichversuche auf das Rollengewicht der auftreffenden Rolle eingestellt wird.

Um auch Wickelrollen unterschiedlicher Durchmesser abstoppen zu können, schlägt die EP 0 705 783 vor, an Stelle einer Stoppleiste, eine Vielzahl von nebeneinander liegenden Stoppeinrichtungen zu verwenden.

Die Anzahl der Stoppeinrichtungen, die benötigt werden um einen Wickel beispielsweise einer bestimmten Breite abzubremsen, wird bei der Inbetriebnahme die Rollenstoppleiste eingestellt. Eine Einstellung in Abhängigkeit von Parametern im laufenden Betrieb erfolgt nicht.

Bei allen Lösungen, die in der EP 0 705 783 beschrieben sind, besteht das Problem, das die Einstellungen vor der Inbetriebnahme erfolgen müssen. Eine Ansteuerung im laufenden Betrieb ist nicht möglich.

Es ist Aufgabe der Erfindung, die Nachteile des Standes der Technik zu überwinden, insbesondere eine Einrichtung zum Abbremsen oder Stoppen eines Wickels zur Verfügung zu stellen, der die Nachteile des Standes der Technik vermeidet, insbesondere betreffend die Einstellung des Dämpfungssystems der Rollenstoppleiste verringert und eine schonendere Rollenbehandlung auch unabhängig von den tatsächlichen Rolleneigenschaften gewährleistet, insbesondere bei Übergabe an eine Förderstrecke beziehungsweise Fördereinrichtung.

Erfindungsgemäß wird die Aufgabe dadurch gelöst, dass bei einer Einrichtung zum Abbremsen oder Stoppen eines Wickels eine Sensoreinrichtung vorgesehen ist, die Bewegungsdaten des einzelnen Wickels nach einem Auswurf und Auftreffen auf die Einrichtung zum Abbremsen erfasst. Nur in Abhängigkeit von diesen Bewegungsdaten wird dann die Einrichtung zum Abbremsen, umfassend zumindest eine Stoppeinrichtung derart gesteuert, dass diese aus der Abbremsfunktionsstellung in eine weitere Funktionsstellung verbracht wird, die frei von einer Abbremswirkung ist und ein Ablegen der Rolle ermöglicht, indem diese bei Stillstand des Wickels in die weitere zweite Funktionsstellung verbracht wird.

Bevorzugt umfasst die Einrichtung zum Abbremsen wie beispielsweise in der EP 0 705 783 beschrieben eine Vielzahl von Stoppeinrichtungen in Form von Stoppleisten. Eine Stoppeinrichtung wie in der EP 0 554 700 oder US 5 257 748 A ist ebenfalls denkbar.

Insbesondere umfasst die Sensoreinrichtung zur Ermittlung von Bewegungsdaten eines Wickels Einrichtungen zur Erfassung der Geschwindigkeit beziehungsweise der Beschleunigung der ausgeworfenen Rolle nach dem Auflaufen auf die Stoppleisten. Aus diesen Daten kann dann der Zeitpunkt ermittelt werden, wenn die Stoppleisten von der aktiven Abbremsstellung in ihre weitere inaktive Funktionsstellung verfahren werden, in welcher entweder die Wickelrolle über diese abrollt oder auf diesen liegen bleibt. Im Gegensatz zu den indirekten Messgrößen im Stand der Technik, wie beispielsweise den Wickeldurchmesser, handelt es sich bei Auswertung der Geschwindigkeit beziehungsweise der Beschleunigung um eine direkte Messgröße, die individuell für jeden ausgeworfenen Wickel, nach dessen Auswurf und Auflaufen an den Stoppleisten aus der Position ermittelt werden kann.

Besonders bevorzugt ist es, als Messsystem für die Beschleunigung beziehungsweise die Geschwindigkeit der ausgeworfenen Rolle ein optisches Messsystem einzusetzen.

Neben der Vorrichtung stellt die Erfindung auch ein Verfahren zum Abbremsen beziehungsweise Abstoppen einer aus einer Wickelvorrichtung ausgeworfenen Wickelrolle zur Verfügung. Dieses Verfahren ist **dadurch gekennzeichnet, dass** die Bewegungsdaten der ausgeworfenen Wickelrolle wie beispielsweise Wickelgeschwindigkeit oder Beschleunigung direkt erfasst werden und aufgrund dieser Daten beispielsweise mit Hilfe einer Steuereinrichtung die Stoppeinrichtung, umfassend beispielsweise die Stoppleisten, angesteuert werden und zwar so, dass die Wickelrolle nach dem Abbremsen auf diesen liegen bleibt oder aber durch Ausbildung einer geneigten Ebene über diese abrollen kann.

Die erfindungsgemäße Lösung ermöglicht eine schonende Rollenbehandlung, insbesondere im Übergabebereich auf eine Fördereinrichtung oder einen Ablagetisch.

Die Erfindung soll nachfolgend detailliert ohne Beschränkung hierauf anhand der Ausführungsbeispiele beschrieben werden.

Es zeigen
- Figur 1: eine Ausgestaltung einer Rollenwickelvorrichtung mit einer Rampe und erfindungsgemäßem Meßsystem;
- Figur 2: die einzelnen Funktionsstellungen der Abrollstoppeinrichtung; und
- Figur 3: ein Flussdiagramm zur Steuerung einer Abrollstoppeinrichtung.

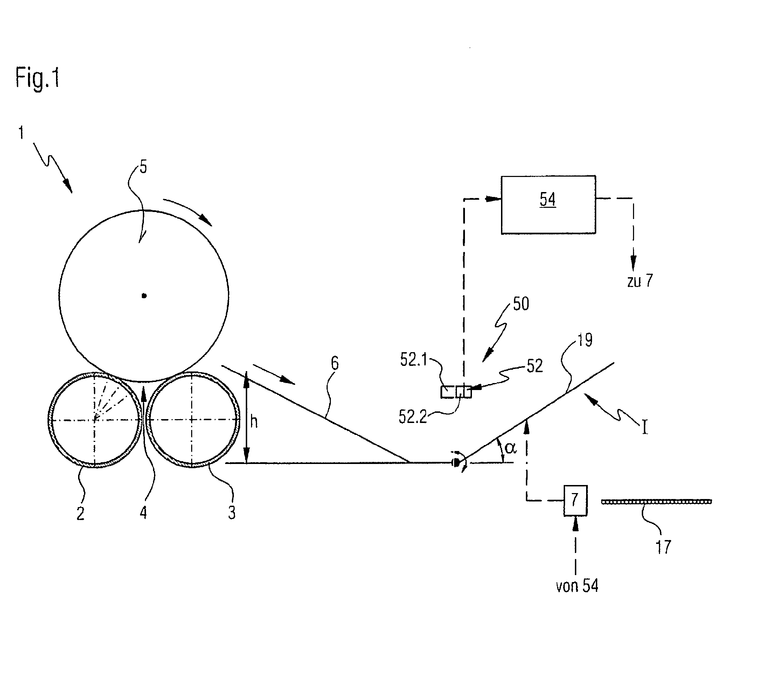

In Figur 1 ist zum Verständnis der Erfindung eine Rollenwickelvorrichtung, gezeigt. Eine Rollenwickelvorrichtung ist mit einem Ablagetisch ist beispielsweise aus der DE 10 2005 017 998 bekannt geworden.

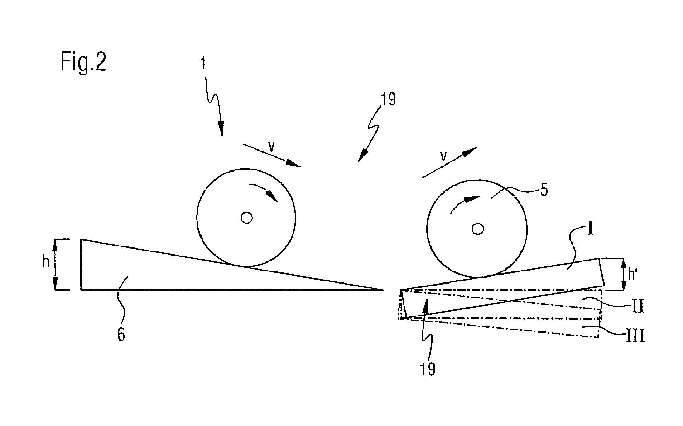

Die Rollenwickelvorrichtung 1 weist eine erste Tragwalze 2 und eine zweite Tragwalze 3 auf, die zusammen ein Wickelbett 4 bilden, in welchem eine Wickelrolle 5 gewickelt wird. In bekannter Weise können im Wickelbett 4 mehrere Wickelrollen 5 über die Maschinenbreite betrachtet nebeneinander angeordnet sein. Diese Wickelrollen 5 werden dann gleichzeitig gewickelt. Die Zufuhr der Bahn, die auf die Wickelrolle 5 aufgewickelt wird, ist hier nicht dargestellt. Wenn eine Wickelrolle 5 fertig gewickelt worden ist, also beispielsweise die Größe aufweist, die in Figur 1 dargestellt ist, dann wird die Wickelrolle 5 aus der Wickelvorrichtung 1 ausgestoßen. Hier wird in vorliegendem Beispiel gemäß DE 10 2005 017 998 A1 die Wickelrolle 5 über die zweite Tragwalze 3 hinweg auf eine Rampe 6 gedrückt, so dass die hinweg gedrückte Rolle über die Rampe 6 beispielsweise auf den Förderer 17 herabrollen kann. Vorher wird die Wickelrolle 5 jedoch gestoppt. Dazu sind Stoppleisten 19, die auch als Fänger bezeichnet werden, angeordnet, um ein Weiterrollen der Wickelrolle 5 zu verhindern. Die Stoppleisten 19 können wie in der EP 0 705 783 beschrieben, ausgebildet sein. Dabei ist eine schonende Behandlung der Wickelrollen 5 anzustreben. Die Stoppleisten 19 sind dazu zumindest in zwei Funktionsstellungen I und II verbringbar, vorzugsweise in drei Funktionsstellungen I, II, III. In der ersten Funktionsstellung I, die der so genannten Abbrems- beziehungsweise Abfangposition entspricht, sind die Stoppleisten 19 gegenüber der Rampe 6 und auch dem daran anschließenden Förderer 17 in einem Winkel α angestellt. Der Winkel α kann variieren. Die weiteren Funktionsstellungen sind in der Figur 2 wiedergegeben. In der zweiten Funktionsstellung II sind die Stoppleisten 19 in einer Ebene mit dem Förderer 19 angeordnet. Diese Funktionsstellung entspricht der Horizontalposition. Die dritte Funktionsstellung III entspricht der Überrollstellung. In dieser ist die einzelne Stoppleiste 19 gegenüber der Horizontalposition II um einen weiteren Winkel β geneigt und bildet gegenüber dem anschließenden Aggregat, Ablagetisch und/ oder Förderer 17 eine schiefe Ebene, über die die Wickelrolle 5 abrollt.

Der Fänger beziehungsweise die Stoppleisten 19 werden erfindungsgemäß erst in die zweite oder dritte Funktionsstellung II, III verbracht, wenn die Geschwindigkeit v der Wickelrolle 5 nahezu Null beträgt. Dabei wird ausgenutzt, dass die einzelne Wickelrolle 5 sich entlang der Stoppleiste 19 und wieder zurück bewegt und dadurch abgebremst wird. Dies setzt voraus, die Geschwindigkeit v=0 zu erfassen.

Erfindungsgemäß ist dazu eine Sensoreinrichtung 50 umfassend beispielsweise Lichtschranken 52.1, 52.1 vorgesehen, mit der die Geschwindigkeit der Wickelrolle 5 beim Abrollen über die Rampe 6 beziehungsweise die Beschleunigung- oder Verzögerung der Wickelrolle 5 beim Entlangrollen an der Stoppleiste 19 ermittelt werden kann. Entsprechend dem von der Sensoreinrichtung 50 aufgenommenen Signal, das an eine Steuereinrichtung 54 übermittelt wird, werden die Stoppleisten 19 betätigt und in die zweite Funktionsstellung II oder die dritte Funktionsstellung III verbracht, wozu beispielsweise eine diesen zugeordnete Stelleinrichtung 7 angesteuert wird.

Figur 2 verdeutlicht in schematisiert vereinfachter Darstellung die unterschiedlichen Funktionsstellungen I bis III.

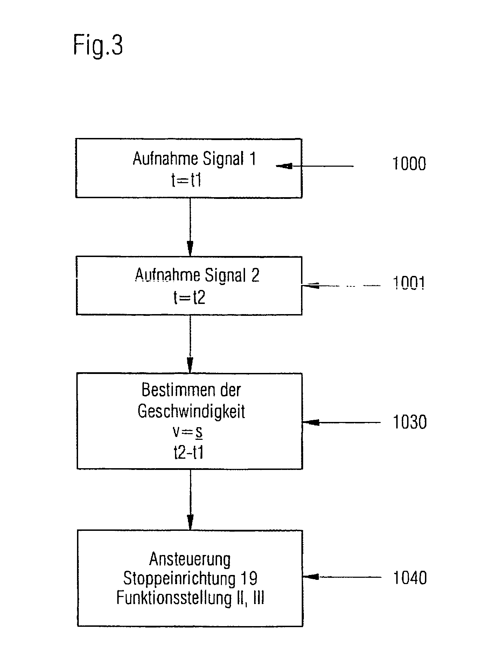

In Figur 3 ist ein Ablaufdiagramm einer erfindungsgemäßen Steuerung gezeigt. Zunächst wird beispielsweise im Schritt 1000 ein erstes Signal, beispielsweise ein erstes Lichtschrankensignal des ablaufenden Wickels aufgenommen. Im Schritt 1010 wird dann ein zweites Signal, beispielsweise ein zweites Lichtschrankensignal aufgenommen. Der Abstand der beiden Lichtschranken ist unverändert konstant. Aus der Zeitdauer, die vergeht, bis nach Passieren der ersten Lichtschranke der Wickel die zweite Lichtschranke durchläuft kann die mittlere Geschwindigkeit v= s/t in diesem Abschnitt beispielsweise in einer Rechnereinrichtung im Schritt 1030 bestimmt werden, wobei s der Abstand der beiden Lichtschranken ist und t die Zeit die zwischen Durchlaufen der ersten und der zweiten Lichtschranke vergeht. Wird eine Geschwindigkeit von v=0 ermittelt, wird die Stoppleiste 19 angesteuert gemäß 1040 und abgesenkt, entweder in Funktionsstellung II oder III.

Bei der vorliegenden Erfindung wird zum ersten Mal eine Vorrichtung und ein Verfahren angegeben, mit dem mit Hilfe von direkten Messsignalen wie beispielsweise Geschwindigkeit und/oder Beschleunigung die Bewegung eines Wickels, insbesondere einer Papierbahnrollen während des laufenden Betriebes bestimmt werden kann. Aufgrund dieser Daten ist es dann möglich jeden einzelnen Wickel individuell abzubremsen.

### Bezugszeichenliste

- 1: Rollenwickelvorrichtung
- 2, 3: Tragwalze
- 4: Wickelbett
- 5: Wickelrolle (Wickel)
- 6: Rampe
- 7: Stelleinrichtung
- 17: Förderer
- 19: Stoppleisten
- 50: Sensoreinrichtung
- 52.1, 52.2: Lichtschranken
- 54: Steuereinrichtung
- 1000: Erstes Signal
- 1010: Zweites Signal
- 1030: Berechnung der Geschwindigkeit aus erstem und zweitem Signal
- 1040: Ansteuern der Stoppeinrichtung

## Patentansprüche

1. Einrichtung (19) zum Abbremsen oder Stoppen eines Wickels (1), nachdem dieser aus einer Position ausgeworfen wurde, umfassend wenigstens ein Stoppelement, das in wenigstens zwei Funktionsstellungen (I, II, III) verbringbar ist - eine erste Funktionsstellung (I) als Abbremsstellung und zumindest eine weitere Funktionsstellung (II, III), in welcher keine Abbremswirkung erzeugt wird,
**dadurch gekennzeichnet,**
**dass** eine Sensoreinrichtung (50) vorgesehen ist, um Bewegungsdaten des Wickels (5) nach dem Auftreffen des Wickels (5) auf die Einrichtung (19) zum Abbremsen zu erfassen und die Einrichtung (19) derart anzusteuern, dass das einzelnen Stoppelement bei Stillstand des Wickels (5) in die weitere zweite Funktionsstellung (II, III) verbracht wird.

2. Einrichtung (19) gemäß Anspruch 1,
**dadurch gekennzeichnet,**
**dass** eine Steuereinrichtung (54) vorgesehen ist, die das Signal der wenigstens einen Sensoreinrichtung (50) aufnimmt, an die Einrichtungen (19) zum Abbremsen beziehungsweise Abstoppen weiterleitet und diese entsprechend der aufgenommenen Daten von der Sensoreinrichtung (50) ansteuert.

3. Einrichtung (19) nach Anspruch 2,
**dadurch gekennzeichnet, dass**
dass die Sensoreinrichtung (50) zur Erfassung der Bewegungsdaten Einrichtungen zum Erfassen der Geschwindigkeit beziehungsweise der Beschleunigung des Wickels (5), der aus einer Position ausgeworfen wurde, umfasst.

4. Einrichtung (19) nach einem der Ansprüche 2 oder 3,
**dadurch gekennzeichnet,**
**dass** die Sensoreinrichtung (50) eine optische Messeinrichtung umfasst.

5. Einrichtung (19) nach einem der Ansprüche 1 bis 4
**dadurch gekennzeichnet,**
**dass** das einzelne Stoppelement schwenkbar oder verschiebbar gelagert ist.

6. Einrichtung (19) gemäß Anspruch 5,
**dadurch gekennzeichnet,**
**dass** diese als Bremseinrichtung pneumatisch betätigte Zylinder umfasst, die jeweils wenigstens einem Stoppelement (19) zugeordnet sind.

7. Einrichtung (19) gemäß einem der Ansprüche 2 bis 6,
**dadurch gekennzeichnet,**
**dass** die weitere Funktionsstellung (II, III) durch die Lage der einzelnen Stoppleiste in einer horizontalen Ebene oder in einem negativen Winkel (β) zur horizontalen Ebene unter Ausbildung einer schiefen Ebene charakterisiert ist.

8. Verfahren zum Abbremsen oder Abstoppen eines aus einer Position ausgeworfenen Wickels (5) mittels wenigstens einer Stoppleiste, die zwischen wenigstens zwei Funktionsstellungen (I, II) verstellbar ist,
**dadurch gekennzeichnet,**
**dass** die Bewegungsdaten des Wickels (5) nach Auftreffen auf die Stoppleisten der Einrichtung (19) zum Abbremsen oder Stoppen des Wickels (5) in der ersten Funktionsstellung (I) der einzelnen Stoppleiste erfasst werden und diese aufgrund der Bewegungsdaten des Wickels (5) derart angesteuert werden, dass diese bei Erreichen einer Geschwindigkeit (v) des Wickels (5) von annähernd Null in die weitere zweite Funktionsstellung (II, III) verbracht werden.

## Claims

1. Device (19) for braking or stopping a wound roll (1) after the latter has been thrown out of a position, comprising at least one stopping element which can be moved into at least two functional positions (I, II, III) - a first functional position (I) as a braking position and at least one further functional position (II, III), in which no braking action is produced,
**characterized in that**
a sensor device (50) is provided in order to acquire the movement data from the wound roll (5) after the wound roll (5) has encountered the device (19) for braking and to activate the device (19) in such a way that the individual stopping element is moved into the further, second functional position (II, III) when the wound roll (5) is at a standstill.

2. Device (19) according to Claim 1,
**characterized in that**
a control device (54) is provided, which picks up the signal from the at least one sensor device (50), passes it on to the devices (19) for braking or stopping and activates the latter in accordance with the data picked up from the sensor device (50).

3. Device (19) according to Claim 2,
**characterized in that**
the sensor device (50) for acquiring the movement data comprises devices for acquiring the speed or the acceleration of the wound roll (5) which has been thrown out of a position.

4. Device (19) according to either of Claims 2 and 3,
**characterized in that**
the sensor device (50) comprises an optical measuring device.

5. Device (19) according to one of Claims 1 to 4,
**characterized in that**
the individual stopping element is mounted such that it can be pivoted or displaced.

6. Device (19) according to Claim 5,
**characterized in that**
this comprises, as a braking device, pneumatically actuated cylinders which in each case are assigned to at least one stopping element (19).

7. Device (19) according to one of Claims 2 to 6,
**characterized in that**
the further functional position (II, III) is **characterized by** the position of the individual stopping strip in a horizontal plane or at a negative angle (β) with respect to the horizontal plane, forming an inclined plane.

8. Method for braking or stopping a wound roll (5) thrown out of a position, by means of at least one stopping strip which can be displaced between at least two functional positions (I, II),
**characterized in that**
the movement data from the wound roll (5) are acquired after the encounter with the stopping strips of the device (19) for braking or stopping the wound roll (5) in the first functional position (I) of the individual stopping strip, and the latter is activated on the basis of the movement data of the wound roll (5) in such a way that, when a speed (v) of the wound roll (5) reaches approximately zero, the said stopping strip is moved into the further, second functional position (II, III).

## Revendications

1. Dispositif (19) pour freiner ou arrêter un rouleau (1) après qu'il ait été éjecté hors d'une position, comprenant au moins un élément d'arrêt qui peut être amené dans au moins deux positions fonctionnelles (I, II, III), une première position fonctionnelle (I) en tant que position de freinage et au moins une position fonctionnelle supplémentaire (II, III) dans laquelle aucun effet de freinage n'est généré,
**caractérisé en ce**
**qu'**il est prévu un dispositif de détection (50) pour détecter les données de déplacement du rouleau (5) après la rencontre du rouleau (5) avec le dispositif (19) en vue du freinage et pour commander le dispositif (19) de telle sorte que chacun des éléments d'arrêt, à l'immobilisation du rouleau (5), soit amené dans la deuxième position fonctionnelle supplémentaire (II, III).

2. Dispositif (19) selon la revendication 1, **caractérisé en ce qu'**il est prévu un dispositif de commande (54) qui enregistre le signal de l'au moins un dispositif de détection (50), le transmet aux dispositifs (19) de freinage ou d'arrêt et commande ceux-ci en fonction des données enregistrées du dispositif de détection (50).

3. Dispositif (19) selon la revendication 2, **caractérisé en ce que** le dispositif de détection (50), pour détecter les données de mouvement, comprend des dispositifs pour détecter la vitesse ou l'accélération du rouleau (5) qui a été éjecté hors d'une position.

4. Dispositif (19) selon l'une des revendications 2 ou 3, **caractérisé en ce que** le dispositif de détection (50) comprend un dispositif de mesure optique.

5. Dispositif (19) selon l'une des revendications 1 à 4, **caractérisé en ce que** chaque élément d'arrêt individuel est monté de manière à pouvoir pivoter ou coulisser.

6. Dispositif (19) selon la revendication 5, **caractérisé en ce que** celui-ci comprend comme dispositif de freinage des vérins à commande pneumatique auxquels sont respectivement associés au moins un élément d'arrêt (19).

7. Dispositif (19) selon l'une des revendications 2 à 6, **caractérisé en ce que** la position fonctionnelle supplémentaire (II, III) est **caractérisée par** la position de chaque baguette d'arrêt individuelle dans un plan horizontal ou dans un angle négatif (β) par rapport au plan horizontal en formant un plan oblique.

8. Procédé pour freiner ou arrêter un rouleau (5) éjecté hors d'une position, au moyen d'au moins une baguette d'arrêt qui peut être déplacée entre au moins deux positions fonctionnelles (I, II),
**caractérisé en ce**
**que** les données de déplacement du rouleau (5) après la rencontre du rouleau (5) avec les baguettes d'arrêt du dispositif (19) en vue du freinage ou de l'arrêt du rouleau (5) sont détectées dans la première position fonctionnelle (I) de chacune des baguettes d'arrêt et celles-ci sont commandées en fonction des données de déplacement du rouleau (5) de telle sorte que celles-ci, lorsqu'une vitesse (v) du rouleau (5) proche de zéro est atteinte, soient amenées dans la deuxième position fonctionnelle supplémentaire (II, III).
